# EUROPÄISCHE PATENTSCHRIFT

(11) **EP 0 689 025 B1**
(45) Veröffentlichungstag und Bekanntmachung des Hinweises auf die Patenterteilung: **25.09.1996**
(21) Anmeldenummer: 95107070.5
(22) Anmeldetag: 10.05.1995
(51) Int. Cl.: F28F 9/00, B23K 31/02

(54) **Verfahren zum Verschweissen von kammartigen Abdichtleisten an Plattenwärmetauschern**
Process for welding comb-like sealing profile to plate heat exchangers
Procédé de soudage de profilés d'etanchéité de type peigne, à des échangeurs de chaleur à plaques

(30) Priorität: 25.06.1994 DE 4422283
(43) Veröffentlichungstag der Anmeldung: 27.12.1995
(73) Patentinhaber: BDAG Balcke-Dürr Aktiengesellschaft, D-40882 Ratingen (DE)
(72) Erfinder: Beier, Albert, D-40878 Ratingen (DE); Herrmann, Wolfgang, D-40878 Ratingen (DE)
(74) Vertreter: Stenger, Watzke & Ring Patentanwälte

(56) Entgegenhaltungen:
- EP-A- 0 002 986
- CH-A- 683 125

## Beschreibung

Die Erfindung betrifft ein Verfahren zum Verschweißen von kammartigen Abdichtleisten an Plattenwärmetauschern für im Gegenstrom, Kreuzgegenstrom oder Querstrom zueinander geführte Gase, insbesondere der kalten, aus einer Rauchgasentschwefelungsanlage kommenden Reingase und der zur Wiederaufheizung dieser Gase dienenden Rauchgase von mit fossilen Brennstoffen betriebenen Kraftwerken, insbesondere Müllverbrennungsanlagen.

Derartige Plattenwärmetauscher bestehen aus einer Mehrzahl von paarweise Zu Plattenpaaren verbundenen, vorzugsweise aus hochkorrosionsbeständigem Material hergestellten Einzelplatten, die wiederum zu einem Plattenstapel miteinander verbunden sind, wobei zur Trennung der am Wärmeaustausch beteiligten Gasströme kammartige Abdichtleisten sowohl an den Rändern als auch gegebenenfalls im Mittenbereich des Plattenstapels angeordnet sind.

Insbesondere bei der Verwendung von hochkorrosionsbeständigem Material, beispielsweise hochnickelhaltigen Chrom-Molybdän-Stählen, wie Hasteloy, als Material für die Einzelplatten und die Abdichtleisten ist es schwierig, gasdichte Schweißnähte mit hoher Korrosionsbeständigkeit herzustellen. Problematisch ist hierbei nicht nur, daß Teile mit unterschiedlicher Wandstärke verschweißt werden müssen; während die Einzelplatten eine Blechdicke von beispielsweise 0,37 mm haben, liegt die Wandstärke der Abdichtleisten beispielsweise bei 2,6 mm. Es kommt nämlich erschwerend hinzu, daß die Kanten dieser dünnen Bleche mit der Breitseite, d.h. der Fläche der Abdichtleiste verschweißt werden müssen.

Bisher wurde die Verschweißung der kammartigen Abdichtleisten mit den zu Plattenpaaren verbundenen Einzelplatten des Wärmetauschers (z.B. CH-A-683125) unter Verwendung einer Wolfram-Inert-Gas-Schweißung durchgeführt, wobei sich dicke Schweißraupen ergaben. Bei einer Prüfung der auf diese Weise hergestellten Schweißnähte stellte sich häufig heraus, daß die Schweißnähte aufgrund von Mikroporen nicht gasdicht sind. Diese Mikroporen entstehen aufgrund der beim Schweißen eingebrachten hohen Wärme. Darüber hinaus stellte es sich heraus, daß auch die Korrosionsbeständigkeit der erzeugten Schweißnähte nicht den gestellten Anforderungen genügt, obwohl hochkorrosionsbeständiges Material nicht nur zur Herstellung der Einzelplatten und Abdichtleisten, sondern auch als Schweißmaterial verwendet wurde. Untersuchungen ergaben, daß das ursprünglich hochkorrosionsbeständige Schweißmaterial wegen der beim Schweißen eingebrachten hohen Wärme und wegen des beim Schweißen entstehenden Abbrandes einer Materialveränderung unterliegt, die es erheblich korrosionsempfindlicher macht als das Ausgangsmaterial.

Der Erfindung liegt die **Aufgabe** zugrunde, das Verfahren der eingangs beschriebenen Art zum Verschweißen von kammartigen Abdichtleisten an Plattenwärmetauschern derart weiterzubilden, daß auch im großtechnischen Verfahren nicht nur gasdichte, sondern auch hochkorrosionsbeständige Schweißnähte erzeugt werden können.

Die **Lösung** dieser Aufgabenstellung durch die Erfindung ist dadurch gekennzeichnet, daß die Verschweißung der im Abstand und parallel zueinander liegenden, miteinander verbundenen und in Schlitze der Abdichtleiste hineinragenden Ränder der Plattenpaare mit der Abdichtleiste mit mindestens teilweiser Verwendung des über die Außenfläche der Abdichtleiste überstehenden Materials der Stirnkanten der Plattenränder erfolgt, daß die sich an die miteinander verbundenen Ränder der Plattenpaare anschließenden, in etwa einer Linie und am geschlitzten Innenrand der Abdichtleiste anliegenden Stirnkanten der Einzelplatten ohne Zusatzwerkstoff ausschließlich unter Verwendung des Plattenwerkstoffes mit der Außenseite der Abdichtleiste verschweißt werden und daß während der Verschweißung durch Anlage eines Formteils aus gut wärmeleitendem Material an der Innenseite der Abdichtleiste ständig beim Schweißprozeß entstehende Wärme abgeführt wird.

Durch die erhebliche Reduzierung bzw. Vermeidung von Zusatzmaterial beim Schweißvorgang und die ständige Abfuhr von durch das Schweißen eingebrachter Wärme entstehen gasdichte Schweißnähte mit geringem Schweißnahtquerschnitt. Hierbei ist es vorteilhaft, daß durch die an der Unterseite der Abdichtleiste anliegenden Formteile eine räumliche Zuordnung der miteinander zu verschweißenden Bauteile mit geringen Luftspalten erzeugt und während des gesamten Schweißvorganges aufrechterhalten wird. Wegen des Wegfalls bzw. der erheblichen Reduzierung des beim Schweißen verwendeten Zusatzwerkstoffes entfällt auch eine negative Beeinflussung der Korrosionsbeständigkeit der mit dem erfindungsgemäßen Verfahren erzeugten Schweißnähte.

Um einerseits die Wärmeabfuhr und andererseits die räumliche Zuordnung der zu verschweißenden Bauteile zu verbessern, können gemäß einem weiteren Merkmal der Erfindung zusätzlich in die Zwischenräume zwischen benachbarten Plattenpaaren im Anschluß an die Abdichtleiste Formstücke aus gut wärmeleitendem Material eingebracht werden.

Schließlich wird mit der Erfindung vorgeschlagen, die Formteile mit Bohrungen für die Zufuhr von Formiergas zu den Schweißnähten zu versehen. Durch diese unmittelbare Zufuhr von Formiergas entgegengesetzt zur Schweißrichtung des Brenners ergibt sich eine wirksame Verbesserung der Schweißnahtqualität.

Das erfindungsgemäße Verfahren soll nunmehr anhand eines Ausführungsbeispiels erläutert werden. Es zeigt:
- Fig. 1: einen Randausschnitt eines Plattenwärmetauschers, der aus zu Plattenpaaren miteinander verbundenen Einzelplatten hergestellt ist und an seinem Rand mit einer kammartigen Abdichtleiste verschweißt werden soll,
- Fig. 2: eine um 90° versetzte Ansicht der Darstellung in Fig. 1,
- Fig. 3: eine der Fig. 2 entsprechende Draufsicht auf die bei der Verschweißung verwendeten Formteile,
- Fig. 4: eine der Fig. 2 entsprechende Darstellung nach der Verschweißung der miteinander verbundenen und in Schlitze der Abdichtleiste hineinragenden Ränder der Plattenpaare mit der Abdichtleiste,
- Fig. 5: eine der Fig. 4 entsprechende Darstellung nach Verschweißung der sich an die Ränder der Plattenpaare anschließenden, am geschlitzten Innenrand der Abdichtleiste anliegenden Stirnkanten der Einzelplatten mit der Abdichtleiste und
- Fig. 6: eine der Fig. 1 entsprechende Darstellung nach Einschweißen der Abdichtleiste.

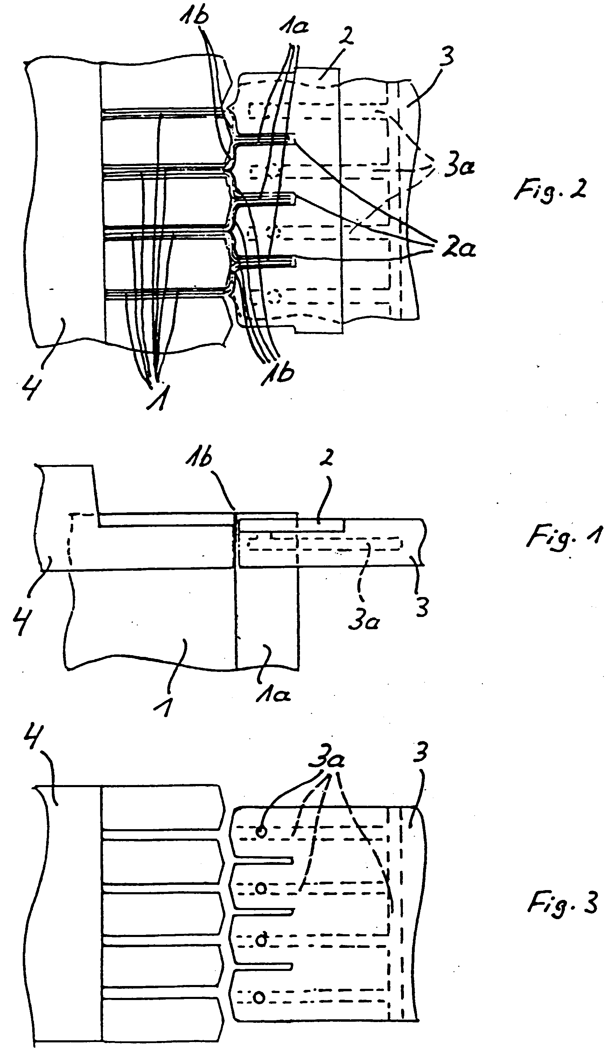

In den Fig. 1 und 2 sind Randteile von insgesamt drei Plattenpaaren zu erkennen, die jeweils aus Einzelplatten 1 hergestellt worden sind. Die Ränder 1a dieser Einzelplatten 1 liegen durch zweifaches Abbiegen unmittelbar aneinander an und sind miteinander verschweißt, wodurch die erwähnten Plattenpaare entstehen.

Mit diesen Rändern 1a und den sich an diese Ränder 1a unmittelbar anschließenden Randbereichen 1b der Einzelplatten 1 soll eine Abdichtleiste 2 gasdicht verschweißt werden, die gemäß Fig. 2 mit Schlitzen 2a für die Ränder 1a versehen und damit kammartig ausgebildet ist. Die Verschweißung dieser Abdichtleiste 2 erfolgt sowohl bezüglich der Ränder 1a als auch der Randbereiche 1b der Einzelplatten 1 jeweils an deren Stirnkante, wie insbesondere aus Fig. 1 hervorgeht. Diese Darstellung zeigt, daß die Stirnkanten sowohl der Ränder 1a als auch der Randbereiche 1b geringfügig über die Außenfläche der Abdichtleiste 2 hervorstehen.

Um die Abdichtleiste 2 unter gleichzeitiger Reduzierung der Luftspalte in die anzuschweißende Position zu bringen und in dieser Position zu halten, wird ein Formteil 3 verwendet, das gemäß Fig. 3 im vorderen Bereich durch Schlitze ebenfalls kammartig ausgebildet ist und in das gemäß Fig. 1 die Abdichtleiste 2 eingelegt wird. Mit Hilfe dieses Formteiles 3 wird die Abdichtleiste 2 in die Anschweißposition relativ zu den Einzelplatten 1 überführt. Als Gegenhalter dient hierbei ein weiteres Formteil 4, das in die Zwischenräume zwischen benachbarten Plattenpaaren eingreift, wie die Fig. 1 und 2 zeigen. Die Formteile 3 und 4 werden aus gut wärmeleitendem Material, beispielsweise einer Kupferlegierung hergestellt. Das Formteil 3 ist beim Ausführungsbeispiel mit Bohrungen 3a versehen, durch die Formiergas zur Schweißnaht geführt werden kann.

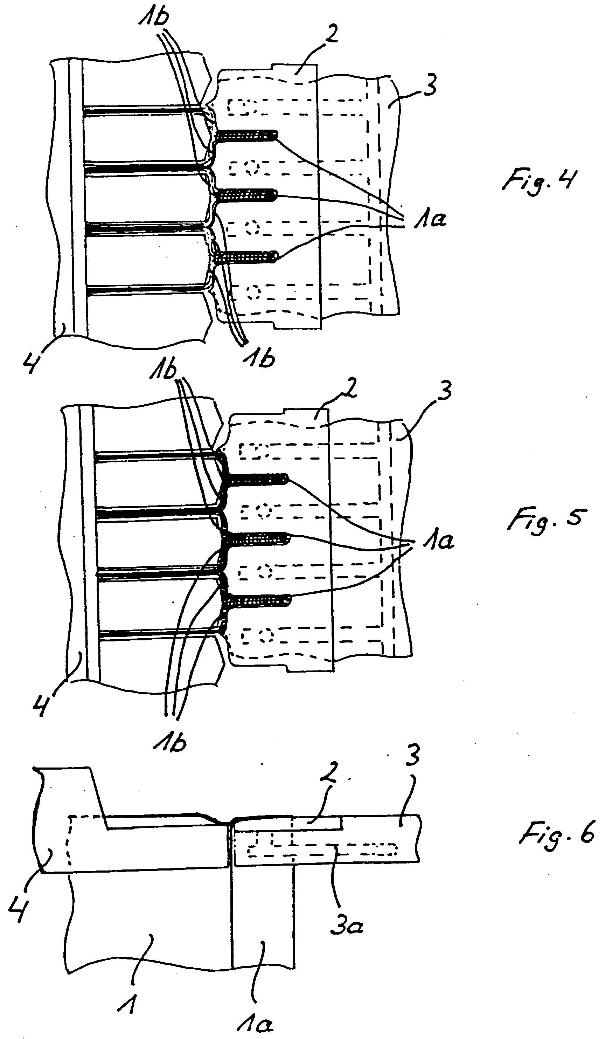

Die Verschweißung der Stirnkanten der in die Schlitze 2a der Abdichtleiste 2 hineinragenden Ränder 1a der Einzelplatten 1 erfolgt mindestens teilweise unter Verwendung des über die Außenfläche der Abdichtleiste 2 überstehenden Materials der Stirnkanten der Ränder 1a, wie dies aus einem Vergleich der Fig. 6 und 1 hervorgeht. Dieser Schweißvorgang ist in Fig. 4 dargestellt.

Das Verschweißen der sich an die Ränder 1a anschließenden Randbereiche 1b der Einzelplatten 1 im Bereich Ihrer Stirnkante mit der Außenfläche der Abdichtleiste 2 erfolgt ausschließlich ohne Zusatzwerkstoff nur unter Verwendung des Plattenwerkstoffes, so daß sich gemäß Fig. 5 sehr schmale und kleinvolumige Schweißnähte ergeben.

Bei beiden Verschweißungsvorgängen wird die beim Schweißen unvermeidbar eingebrachte Wärme kontinuierlich durch das einerseits an der Rückseite der Abdichtleiste 2 anliegende Formteil 3 und andererseits durch das in den Randbereichen 1b an den Einzelplatten 1 anliegende Formteil 4 abgeführt. Damit wird sowohl eine Überhitzung als auch das Entstehen von Abbrand vermieden. Es können somit weder Mikroporen in den Schweißnähten entstehen, die zu einer mangelnden Dichtigkeit führen, noch Materialveränderungen auftreten, die die Korrosionsbeständigkeit der Schweißnähte herabsetzen.

### Bezugszeichenliste

- 1: Einzelplatten
- 1a: Rand
- 1b: Randbereich
- 2: Abdichtleiste
- 2a: Schlitz
- 3: Formteil
- 3a: Bohrung
- 4: Formteil

## Patentansprüche

1. Verfahren zum Verschweißen von kammartigen Abdichtleisten an Plattenwärmetauschern für im Gegenstrom, Kreuzgegenstrom oder Querstrom zueinander geführte Gase, insbesondere der kalten, aus einer Rauchgasentschwefelungsanlage kommenden Reingase und der zur Wiederaufheizung dieser Gase dienenden Rauchgase von mit fossilen Brennstoffen betriebenen Kraftwerken, insbesondere Müllverbrennungsanlagen, wobei jeder Plattenwärmetauscher aus einer Mehrzahl von paarweise zu Plattenpaaren verbundenen, vorzugsweise aus hochkorrosionsbeständigem Material hergestellten Einzelplatten besteht, die wiederum zu einem Plattenstapel miteinander verbunden sind, und wobei zur Trennung der am Wärmeaustausch beteiligten Gasströme kammartige Abdichtleisten sowohl an den Rändern als auch gegebenenfalls im Mittenbereich des Plattenstapels angeordnet sind,
**dadurch gekennzeichnet,**
daß die Verschweißung der im Abstand und parallel zueinander liegenden, miteinander verbundenen und in Schlitze (2a) der Abdichtleiste (2) hineinragenden Ränder (1a) der Plattenpaare mit der Abdichtleiste (2) mit mindestens teilweiser Verwendung des über die Außenfläche der Abdichtleiste (2) überstehenden Materials der Stirnkanten der Plattenränder (1a) erfolgt,
daß die sich an die miteinander verbundenen Ränder (1a) der Plattenpaare anschließenden, in etwa einer Linie und am geschlitzten Innenrand der Abdichtleiste (2) anliegenden Stirnkanten der Einzelplatten (1) ohne Zusatzwerkstoff ausschließlich unter Verwendung des Plattenwerkstoffes mit der Außenseite der Abdichtleiste (2) verschweißt werden
und daß während der Verschweißung durch Anlage eines Formteils (3) aus gut wärmeleitendem Material an der Innenseite der Abdichtleiste (2) ständig beim Schweißprozeß entstehende Wärme abgeführt wird.

2. Verfahren nach Anspruch 1, dadurch gekennzeichnet, daß zusätzlich in die Zwischenräume zwischen benachbarten Plattenpaaren im Anschluß an die Abdichtleiste (2) Formstücke (4) aus gut wärmeleitendem Material eingebracht werden.

3. Verfahren nach Anspruch 1 oder 2, dadurch gekennzeichnet, daß die Formteile (3) mit Bohrungen (3a) für die Zufuhr von Formiergas zu den Schweißnähten versehen sind.

## Claims

1. Method of welding comb-like sealing strips to plate heat exchangers for gases guided in countercurrent, cross-countercurrent or cross-current flow to one another, in particular the cold clean gases coming from a stack gas desulphurization plant and the stack gases used to reheat these gases in power stations operated with fossil fuels, especially refuse incineration plants, each plate heat exchanger comprising a plurality of individual plates which are connected pairwise to form plate pairs, are preferably produced from highly corrosion-resistant material and are, in turn, connected to one another to form a plate stack, and comb-like sealing strips being arranged both on the borders and also, if appropriate, in the central region of the plate stack, for the purpose of separating the gas flows involved in heat exchange, characterized in that the welding of the spaced, mutually parallel and interconnected borders (la) of the plate pairs, said borders projecting into slots (2a) in the sealing strip (2), to the sealing strip (2) is performed with at least partial use of that material of the front edges of the plate borders (la) which projects beyond the outer surface of the sealing strip (2), in that the front edges of the individual plates (1), which front edges adjoin the interconnected borders (la) of the plate pairs and rest approximately in a line and against the slotted inner border of the sealing strip (2), are welded to the outside of the sealing strip (2) without a filler material, using only the material of the plate, and in that, during the welding operation, heat produced continuously during the welding process is dissipated by placing a shaped part (3) made of material which conducts heat well against the inside of the sealing strip (2).

2. Method according to Claim 1, characterized in that shaped pieces (4) made of a material which conducts heat well are additionally introduced into the interspaces between adjacent plate pairs, adjoining the sealing strip (2).

3. Method according to Claim 1 or 2, characterized in that the shaped parts (3) are provided with holes (3a) for the supply of forming gas to the weld seams.

## Revendications

1. Procédé de soudage de barrettes d'étanchéité du type peigne sur des échangeurs de chaleur à plaques, pour des gaz amenés à contre-courant, à contre-courant croisé ou par courants transversaux les uns par rapport aux autres, notamment des gaz purifiés et froids, venant d'une installation de désulfuration des gaz de fumée, et des gaz de fumée servant au réchauffement de ces gaz, dans des centrales d'énergie électrique à combustibles fossiles, notamment des usines d'incinération d'ordures ménagères, chaque échangeur de chaleur à plaques consistant en une pluralité de plaques individuelles, fabriquées de préférence en un matériau très résistant à la corrosion et reliées deux par deux afin de constituer des paires de plaques, qui sont de nouveau reliées entre elles pour former une pile de plaques, tandis qu'il est prévu, pour la séparation des flux de gaz participant à l'échange de chaleur, des barrettes d'étanchéité du type peigne, aussi bien au niveau des bords que, le cas échéant, dans la zone médiane de la pile de plaques,
caractérisé en ce que,
le soudage des bords (1a) des paires de plaques, situés parallèlement l'un à l'autre avec un écartement, reliés l'un à l'autre et pénétrant dans des fentes (2a) de la barrette d'étanchéité (2), est effectué sur la barrette d'étanchéité (2) en utilisant, au moins en partie, le matériau des chants des bords de plaque (1a), qui dépassent de la face extérieure de la barrette d'étanchéité (2),
en ce que les chants des plaques individuelles (1), faisant suite aux bords (1a), reliés entre eux, des paires de plaques, et appliqués contre le bord intérieur fendu de la barrette d'étanchéité (2)en formant à peu près une ligne, sont soudés sans métal d'apport, c'est-à-dire en utilisant exclusivement le matériau des plaques, sur le côté extérieur de la barrette d'étanchéité (2)
et en ce que, pendant l'opération de soudage, la chaleur alors dégagée est évacuée en permanence, grâce à la présence d'une pièce préformée (3), faite d'un matériau bon conducteur de chaleur et appliquée contre la face intérieure de la barrette d'étanchéité (2).

2. Procédé selon la revendication 1, caractérisé en ce qu'il est prévu, en outre, dans les espaces entre paires de plaques voisines, des pièces profilées (4), en un matériau bon conducteur de chaleur, à la suite de la barrette d'étanchéité (2).

3. Procédé selon la revendication 1 ou 2, caractérisé en ce que les pièces préformées (3) sont pourvues de trous (3a) pour l'amenée de gaz de protection supplémentaire aux soudures.
